# EUROPEAN PATENT APPLICATION

(11) **EP 2 208 578 A1**
(43) Date of publication of application: **21.07.2010**
(21) Application number: 09800164.7
(22) Date of filing: 18.03.2009
(51) Int. Cl.: B24C 11/00, B08B 7/00, B24C 1/00

(54) **BLAST CLEANING PROCESS, AND METHOD AND APPARATUS FOR PRODUCING SOLID CARBON DIOXIDE USED IN THE SAME**

(30) Priority: 23.07.2008 JP 2008190206
(71) Applicant: Takewa Kougyou Kabushiki Kaisha, Yamaguchi 744-0023 (JP)
(72) Inventor: NISHIMURA, Hayato, Kudamatsu-shi Yamaguchi 744-0023 (JP)
(74) Representative: Uchida, Kenji
(86) International application number: PCT/JP2009/001219
(87) International publication number: WO 2010/010647

(57) **Abstract**

The present invention provides a blast cleaning method with cleaning performance adjustable by changing the hardness, shape and size of solid carbon dioxide to be used as a shot material, and a method and a device for producing solid carbon dioxide to be used for the blast cleaning method.

The blast cleaning method includes the steps of: forming plate-shaped solid carbon dioxide, crushed pieces of which are used as a shot material (Step S10), transporting the formed plate-shaped solid carbon dioxide to a site of work (Step S20), crushing the plate-shaped carbon dioxide at the site of work, etc. (Step S30), putting the crushed pieces into a cleaning device (blasting machine) (Step S40), and cleaning an object to be cleaned by blowing the crushed pieces to the object to be cleaned (Step S50).

## Description

### Technical Field

The present invention relates to a blast cleaning method using crushed pieces of solid carbon dioxide as a shot material, and specifically, to a blast cleaning method with cleaning performance adjustable by changing the hardness and size of the shot material, and a method and a device for producing solid carbon dioxide to be used for the blast cleaning method.

### Background Art

Blast cleaning is a method for removing rust and coating on an object to be cleaned made of a metal or ceramic, etc., by blowing a shot material thereto at a high speed, and generally, sand is frequently used as the shot material. However, when sand is used as the shot material, the shot material easily remains on the object to be cleaned, and an operation to recover the shot material may become necessary. Usually, such a shot material is hardly recovered. Further, the increase in the number of processes increases the cleaning cost. Therefore, in recent years, a blast cleaning method using dry ice as the shot material has received attention as a cleaning method in which a shot material hardly remains on the object to be cleaned, and if the shot material remains, it can be easily recovered. Several inventions and utility models relating to this blast cleaning method have already been disclosed.

For example, Patent document 1 discloses an invention titled "cleaning device, cleaning method, and method for producing solid carbon dioxide particles" relating to a cleaning device capable of cleaning a large-area target through a simple cleaning process and a method for producing dry ice to be used for the cleaning device.
The "cleaning device" as an invention disclosed in Patent document 1 includes a first flow channel in which carbon dioxide gas flows, a second flow channel in which an inert gas flows, a junction for joining the gases flowing in the first flow channel and the second flow channel, and a nozzle to be connected to the junction.
With this structure, dry ice blown to a target sublimes and becomes carbon dioxide, so that it is easily removed by an exhaust means, etc. Therefore, the cleaning process becomes simple. By changing the direction of the nozzle, particles (dry ice) of solid-state carbon dioxide formed in the junction can be jetted in a desired direction. Accordingly, a large-area target, etc., can be cleaned.

Patent document 2 discloses an invention relating to "a method for producing dry ice aerosol" by which micro-ordered or smaller dry ice particles with less impurities mixed and high hardness can be produced.
In the "method for producing dry ice aerosol" as an invention disclosed in Patent document 2, liquefied carbon dioxide is decompressed to turn into a gas-liquid mixed state and then jetted into the inside of a nozzle, and into this nozzle, nitride gas is jetted at a high speed.
This production method has an operation in which liquefied carbon dioxide in a gas-liquid mixed state and carbon dioxide are supercooled inside the nozzle by the cold of the nitrogen gas, and aerosol including the nitrogen gas as a dispersion medium and dry ice particles as a dispersion phase is formed. That is, according to the method of this invention, the shot material does not remain on the work, and micro-ordered or smaller dry ice particles with less impurities mixed and high hardness can be formed.

Further, Patent document 3 discloses an invention titled "dry ice snow jet cleaning device and cleaning method" relating to a cleaning device capable of efficiently removing burrs of plastic moldings and extraneous matter on precision parts, etc., and a cleaning method using the cleaning device.
The "dry ice snow jet cleaning device" as an invention disclosed in Patent document 3 includes a dry ice snow jet cleaning nozzle, a liquefied carbon dioxide container, a jet gas source, a dry ice snow forming and supply system which connects the liquefied carbon dioxide container and the jet cleaning nozzle, an opening and closing means for intermittently supplying liquefied carbon dioxide provided in this dry ice snow forming and supply system, and a jet gas supply system which connects the jet gas source and the jet cleaning nozzle.
The "dry ice snow jet cleaning device" thus structured has an operation in which a shot material does not remain on a work. By intermittently jetting dry ice snow while continuously jetting a jet gas as a propellant gas, an object to be cleaned can be cleaned without cooling. Accordingly, condensation can be prevented and uniform and satisfactory cleaning can be attained.
Patent document 1: Japanese Published Unexamined Patent Application No. 2004-89944
Patent document 2: Japanese Published Unexamined Patent Application No. 2003-54929
Patent document 3: Japanese Published Unexamined Patent Application No. 2001-277116

### Disclosure of the Invention

### Problem to be Solved by the Invention

However, in the invention disclosed in Patent document 1 as a conventional technique described above, there is a possibility that impurities mix when carbon dioxide is sublimed, and the hardness of dry ice to be formed becomes lower. Powdery dry ice is not angular, so that its cleaning performance is low. Further, the hardness, shape, and size of dry ice are not changeable, so that the required cleaning performance cannot be realized.

In the invention disclosed in Patent document 2, formed dry ice particles are not angular, so that sufficient hardness may not be obtained. Further, the hardness, shape and size of a shot material are not adjustable, so that the cleaning performance is limited.

In the invention disclosed in Patent document 3, dry ice snow is not angular, so that its cleaning performance cannot be increased. Further, the hardness, shape, and size of dry ice snow are not changeable, so that its cleaning performance is not adjustable.

The present invention was made in view of the conventional circumstances described above, and an object thereof is to provide a blast cleaning method the cleaning performance of which can be adjusted by changing the hardness, shape, and size of solid carbon dioxide to be used as a shot material, and a method and a device for producing solid carbon dioxide to be used for the blast cleaning method.

### Means for Solving the Problems

In order to achieve the above-described object, a blast cleaning method according to a first aspect of the invention, in which a shot material is blown to an object to be cleaned at a high speed to separate extraneous matter, includes the steps of: forming plate-shaped solid carbon dioxide by cooling liquid carbon dioxide while applying a pressure higher than the pressure of the triple point thereto; crushing the plate-shaped solid carbon dioxide; and cleaning an object to be cleaned by using the crushed solid carbon dioxide as a shot material.
This blast cleaning method has an operation in which the cleaning performance is determined according to the hardness, shape, and size of solid carbon dioxide. The plate-shaped solid carbon dioxide is more difficult to vaporize than pellet-like dry ice.

According to a second aspect of the invention, in the blast cleaning method set forth in Claim 1, the thickness of the plate-shaped solid carbon dioxide is 3 to 8 millimeters.
According to this blast cleaning method, the thickness of the plate-shaped solid carbon dioxide is not less than 3 millimeters, so that the minimum necessary mass as a shot material is secured. Further, the thickness of the plate-shaped solid carbon dioxide is not more than 8 millimeters, so that it is easily crushed.

A method for producing solid carbon dioxide according to a third aspect of the invention is a method for producing solid carbon dioxide to be used as a shot material in the blast cleaning method set forth in Claim 1 or 2, and includes a first cooling step of cooling the liquid carbon dioxide to a sublimation temperature at the atmospheric pressure from a temperature higher than the temperature of the triple point while applying a pressure higher than the pressure of the triple point thereto; and a second cooling step of cooling solid carbon dioxide formed in the first cooling step to a temperature lower than the sublimation temperature.
This method for producing solid carbon dioxide has an operation in which liquid carbon dioxide is solidified while impurities (gases other than carbon dioxide) are expelled. Further, this method has an operation in which the hardness of solid carbon dioxide formed in the first cooling step is increased in the second cooling step. Specifically, through these steps, solid carbon dioxide much harder than in the conventional method in which pressurized liquid carbon dioxide is released to the atmosphere and solidified is formed. Further, the method has an operation in which the hardness of solid carbon dioxide to be formed is adjusted by changing a cooling end temperature in the second cooling step. Numerous cracks occur in solid carbon dioxide cooled to a temperature lower than the sublimation temperature at the atmospheric pressure due to a temperature difference when it is exposed to the atmosphere. Accordingly, sharp angles are formed when crushing regardless of the sizes of crushed pieces.

A device for producing solid carbon dioxide according to a fourth aspect of the invention is a device for producing solid carbon dioxide to be used as a shot material in the blast cleaning method of the first or second aspect of the invention, and includes a rectangular tabular hollow part formed to become capable of being filled with liquid carbon dioxide; a cooling jacket formed so as to surround this hollow part; a vacuum heat insulating chamber formed so as to surround the cooling jacket; a vacuum pump for vacuuming the vacuum heat insulating chamber and the hollow part; a liquid carbon dioxide supply means for supplying liquid carbon dioxide into the hollow part through a first supply pipe; a refrigerating machine to be connected to the cooling jacket via a second supply pipe; a first on-off valve installed in the first supply pipe; and a second on-off valve installed in the second supply pipe, where the hollow part, the cooling jacket, and the vacuum heat insulating chamber form a vacuum container with a triplex structure.
The device for producing solid carbon dioxide thus structured has an operation in which gases which may become impurities when forming solid carbon dioxide are discharged by the vacuum pump from the hollow part before injecting liquid carbon dioxide. Further, the device has an operation in which liquid carbon dioxide injected into the hollow part is cooled by heat exchange with a coolant injected into the cooling jacket via the second supply pipe. Further, the device has an operation in which heat transfer between the hollow part and the cooling jacket and the outside is shut off by the vacuum heat insulating chamber decompressed to a vacuum state by the vacuum pump. Additionally, the coolant at a temperature adjusted by using the refrigerating machine is injected into the cooling jacket, so that the temperature of the hollow part is easily controlled.

### Effects of the Invention

As described above, according to the blast cleaning method of the first aspect of the invention, the cleaning performance can be adjusted by changing the hardness, shape, or size of the shot material. The amount of reduction caused by vaporization during transportation can be made smaller than in the case where the pellet-like dry ice is transported. Further, the hardness when solid carbon dioxide is formed can be maintained until just before it is crushed at the site of work.

When powdered dry ice is pelletized, a large-sized hydraulic compressor is required, however, according to the blast cleaning method of the second aspect of the present invention, crushed pieces with a desired size can be easily formed by a small-sized crushing machine. Therefore, the cost necessary for the cleaning operation can be greatly reduced.

According to the method for producing solid carbon dioxide of the third aspect of the present invention, solid carbon dioxide having a hardness suitable as a shot material in the blast cleaning method can be easily formed. Further, plate-shaped solid carbon dioxide from which crushed pieces having sharp angles suitable as a shot material in the blast cleaning method can be formed can be easily produced.

In the device for producing solid carbon dioxide according to the fourth aspect of the present invention, liquid carbon dioxide can be easily cooled to a desired temperature in a state where a pressure higher than the pressure of the triple point is applied thereto.

### BRIEF DESCRIPTION OF THE DRAWINGS

Fig. 1 is a flowchart of a blast cleaning method of an embodiment of the present invention;
Fig. 2A is an external view of an example of a device for producing solid carbon dioxide of the embodiment of the present invention, and Fig. 2B is a schematic view showing solid carbon dioxide taken out of the production device of Fig. 2A;
Fig. 3A is a front view of a vacuum container shown in Fig. 2A, and Fig. 3B is a sectional view on the arrow X-X of Fig. 3A;
Fig. 4 is a flowchart of a method for producing solid carbon dioxide of the present example;
Fig. 5 is a schematic view of an example of a crushing machine for crushing plate-shaped solid carbon dioxide; and
Fig. 6A is a front view of a rotary blade of the crushing machine of Fig. 5, and Fig. 6B is a partial enlarged view of the vicinity of an end portion of Fig. 6A.

### Description of Reference Numerals

- 1:: vacuum container
- 1a:: opening
- 2:: liquid carbon dioxide
- 3:: storing container
- 4:: carbon dioxide solidification chamber
- 4a:: opening
- 5:: cooling jacket
- 5a:: coolant supply port
- 5b:: coolant discharge port
- 6:: vacuum heat insulating chamber
- 6a:: air inlet
- 6b:: drain outlet
- 7:: solid carbon dioxide
- 8:: cover
- 8a:: supply port
- 8b:: discharge port
- 9a:: supply pipe
- 9b:: vacuuming line pipe
- 10:: pressure gauge
- 10a:: branch pipe
- 11a:: coolant supply pipe
- 11b:: coolant discharge pipe
- 12a:: intake pipe
- 12b:: drain pipe
- 13a:: on-off valve
- 13b:: on-off valve
- 13c:: on-off valve
- 13d:: on-off valve
- 13e:: on-off valve
- 14:: surface thermometer
- 15:: crack line
- 16:: crushing blade
- 17:: crushing gear
- 18:: drive shaft
- 19:: crushed pieces
- 20:: vacuum pump
- A:: arrow
- B:: arrow
- C:: arrow

### Best Mode for Carrying Out the Invention

Hereinafter, examples of a blast cleaning method and a method and a device for producing solid carbon dioxide to be used for the blast cleaning method according to a best embodiment of the present invention will be described.

### Example

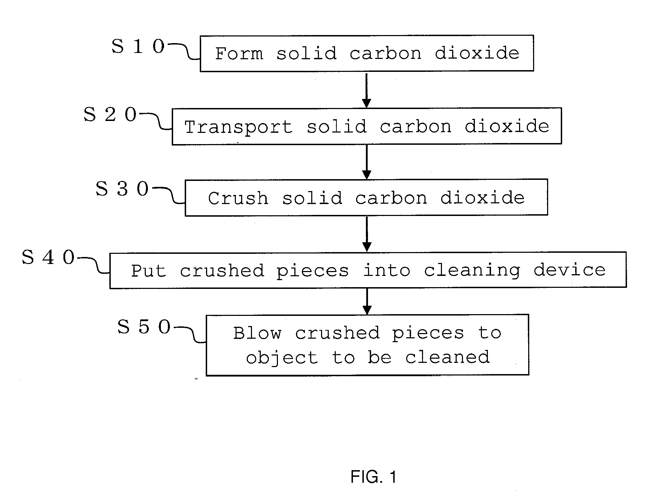

An example of a blast cleaning method will be described with reference to Fig. 1.
Fig. 1 is a flowchart of the blast cleaning method of the embodiment of the present invention.
The blast cleaning method of the present example uses crushed pieces of solid carbon dioxide as a shot material, and includes the steps of, as shown in Fig. 1, forming plate-shaped solid carbon dioxide, crushed pieces of which are used as a shot material (Step S10), transporting the formed plate-shaped solid carbon dioxide to a site of work (Step S20), crushing the plate-shaped carbon dioxide at the site of work, etc. (Step S30), and putting the crushed pieces into a cleaning device (blasting machine) (Step S40), and then cleaning an object to be cleaned by blowing the crushed pieces to the object to be cleaned (Step S50).

First, at Step S 10, plate-shaped solid carbon dioxide is formed by cooling liquid carbon dioxide while applying a pressure higher than the pressure of the triple point thereto in advance in a plant, etc., according to the method described later. If the plate is thinner than 3 millimeters, when the plate is crushed, the minimum necessary mass as a shot material cannot be obtained. On the other hand, when the plate is thicker than 8 millimeters, it takes time to crush the plate into a size suitable as a shot material, and depending on the circumstances, new steps become necessary. Further, a great burden is imposed on the crushing machine, so that this is not preferable. Therefore, in the present example, the thickness of the plate-shaped solid carbon dioxide to be formed at Step S10 is set especially to 3 to 8 millimeters. At Step S20, the formed plate-shaped solid carbon dioxide is transported to the site of actual work of cleaning while it is housed in a commercially available cool box, etc. The cool box preferably has a structure capable of housing a plurality of plates of plate-shaped solid carbon dioxide together although the structure is not especially limited. This step is not necessary when the cooling operation is subsequently performed at the place where the plate-shaped solid carbon dioxide was formed. At Step S30, the plate-shaped solid carbon dioxide is crushed according to the method described later to form 1.5-mm-square to 8-mm-square crushed pieces. The crushed pieces are put into a cleaning device (blasting machine) at Step S40. Then, at Step S50, the cleaning device is operated to blow a shot material formed of the crushed pieces of solid carbon dioxide to an object to be cleaned at a high speed. Accordingly, the object to be cleaned is cleaned.

This blast cleaning method has an operation in which the cleaning performance is determined according to the hardness, shape, and size of the solid carbon dioxide. The thickness of the plate-shaped solid carbon dioxide is not less than 3 millimeters, so that the minimum necessary mass as a shot material is secured. Further, the thickness of the plate-shaped solid carbon dioxide is not more than 8 millimeters, so that it can be easily crushed. In addition, the method has an operation in which the plate-shaped solid carbon dioxide is more difficult to vaporize than pellet-like dry ice.
Specifically, according to the blast cleaning method of the present example, the cleaning performance can be adjusted by changing the hardness, shape, or size of the shot material. In addition, the amount of reduction caused by vaporization during transportation can be made much smaller than pellet-like dry ice. Further, the hardness when solid carbon dioxide is formed can be maintained until just before it is crushed at a site of work, etc., in actuality. Usually, when powdery dry ice is pelletized, a large-sized hydraulic compressor is required, however, in the blast cleaning method of the present example, crushed pieces with a desired size can be easily formed with a large-sized crushing machine. Therefore, the cost necessary for the cleaning operation is greatly reduced. Further, the thickness of the plate-shaped solid carbon dioxide to be formed is not more than 8 millimeters, so that the energy required for cooling can be reduced more than in the conventional method, and liquid carbon dioxide can be solidified reliably up to the center of the thickness. Accordingly, plate-shaped solid carbon dioxide with uniform hardness is formed.

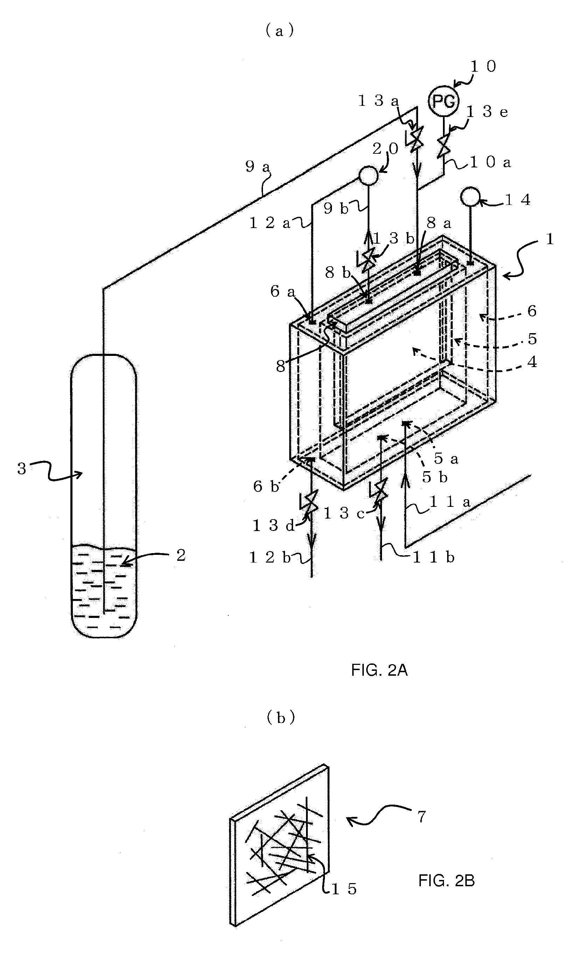

Next, the step of forming plate-shaped solid carbon dioxide (Step S1 of Fig. 1) will be described with reference to Figs. 2 to Fig. 4.

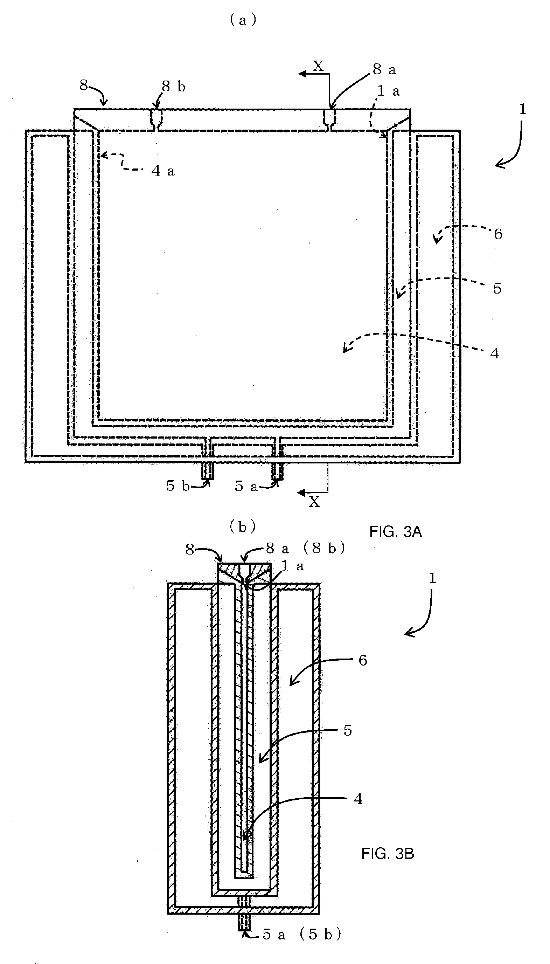

Fig. 2A is an external view of an example of a device for producing solid carbon dioxide of an embodiment of the present invention, and Fig. 2B is a schematic view showing solid carbon dioxide taken out of the production device of Fig. 2A. Fig. 3A is a front view of a vacuum container shown in Fig. 2A, and Fig. 3B is a sectional view on the arrow X-X.
The device for producing solid carbon dioxide of the present example forms plate-shaped solid carbon dioxide by cooling liquid carbon dioxide injected by a pressure higher than the pressure of the triple point by heat exchange with a coolant fed into the cooling jacket from the refrigerating machine.
As shown in Fig. 2A and Figs. 3, the device for producing solid carbon dioxide of the present example includes a vacuum container 1, a storing container 3 for liquid carbon dioxide 2, a refrigerating machine (not shown) which controls the temperature of the coolant, and a vacuum pump 20. The vacuum container 1 has a triplex structure with pressure resistance consisting of a carbon dioxide solidification chamber 4, a cooling jacket 5, and a vacuum heat insulating chamber 6. The carbon dioxide solidification chamber 4 is a rectangular tabular hollow part having an opening 4a formed in an upper surface, and outside the carbon dioxide solidification chamber 4, the cooling jacket 5 and the vacuum heat insulating chamber 6 are successively provided so as to surround five surfaces except for the opening 4a. The inner surface of the carbon dioxide solidification chamber 4 is tapered by making the lower dimension smaller than the upper dimension so that the solidified carbon dioxide is easily taken out. For taking-out plate-shaped solid carbon dioxide 7 (see Fig. 2B) formed in the carbon dioxide solidification chamber 4, an opening 1a is formed in the upper surface of the vacuum container 1 to communicate with the opening 4a of the carbon dioxide solidification chamber 4. Further, to the opening 1a of the vacuum container 1, a cover 8 is attached so as to airtightly close the carbon dioxide solidification chamber 4. To a supply port 8a and a discharge port 8b formed in the cover 8, a supply pipe 9a for liquid carbon dioxide 2 and a vacuuming line pipe 9b are connected, respectively. To the supply pipe 9a, the storing container 3 is connected, and to the vacuuming line pipe 9b, the vacuum pump 20 is connected. That is, the liquid carbon dioxide 2 is supplied into the carbon dioxide solidification chamber 4 from the storing container 3 through the supply pipe 9a, and can be decompressed by the vacuum pump 20.
A coolant supply pipe 11a and a coolant discharge pipe 11b are connected to the coolant supply port 5a and the coolant discharge port 5b formed in the lower surface of the vacuum container 1 so as to communicate with the cooling jacket 5, and to the coolant supply pipe 11a, a refrigerating machine (not shown) is connected. That is, a structure in which a coolant adjusted to a desired temperature by the refrigerating machine is supplied to the cooling jacket 5 through the coolant supply pipe 11a, is formed. Further, to an air inlet 6a and a drain outlet 6b formed in the upper surface and the lower surface of the vacuum container 1, respectively, so as to communicate with the vacuum heat insulating chamber 6, an intake pipe 12a and a drain pipe 12b are connected, respectively, and to the intake pipe 12a, the vacuum pump 20 is connected. Further, on-off valves 13a to 13d are attached to the supply pipe 9a, the vacuuming line pipe 9b, the coolant discharge pipe 11b, and the drain pipe 12b, respectively, in the vicinities of the supply port 8a, the discharge port 8b, the coolant discharge port 5b, and the drain outlet 6b. To a branch pipe 10a branched from the supply pipe 9a between the on-off valve 13a and the supply port 8a, a pressure gauge 10 is connected via the on-off valve 13e. On the upper surface of the vacuum container 1, a surface thermometer 14 for measuring the temperature of the outer surface of the carbon dioxide solidification chamber 4 is provided.

The device for producing solid carbon dioxide thus structured has an operation in which gases which may become impurities when forming solid carbon dioxide 7 are discharged by the vacuum pump 20 from the carbon dioxide solidification chamber 4 before liquid carbon dioxide 2 is injected. The device has an operation in which liquid carbon dioxide 2 injected into the carbon dioxide solidification chamber 4 from the storing container 3 through the supply pipe 9a is cooled by heat exchange with a coolant injected into the cooling jacket 5 through the coolant supply pipe 11a. The device has an operation in which the vacuum heat insulating chamber 6 decompressed to a vacuum state by the vacuum pump 20 shuts off heat transfer between the carbon dioxide solidification chamber 4 and cooling jacket 5 and the outside. Further, the device has an operation in which the cooling rate of the liquid carbon dioxide 2 in the carbon dioxide solidification chamber 4 is controlled by adjusting the temperature of the coolant by using the refrigerating machine.
That is, according to the device for producing solid carbon dioxide of the present invention, liquid carbon dioxide 2 can be easily cooled to a desired temperature in a state where a pressure higher than the pressure of the triple point is applied thereto.

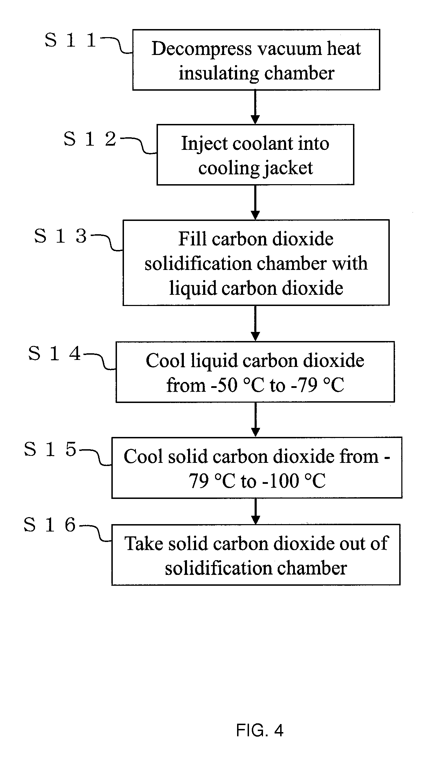

Next, a method for producing solid carbon dioxide by using the production device structured as described above will be described with reference to Fig. 4.
Fig. 4 is a flowchart of the method for producing solid carbon dioxide of the present example.
As shown in Fig. 4, at Step S11, the vacuum pump 20 is actuated to decompress the vacuum heat insulating chamber 6 to a degree of vacuum of 10⁻³ MPa. At Step S12, the vacuum pump 20 connected to the discharge pipe 9b is actuated to decompress the carbon dioxide solidification chamber 4 to a degree of vacuum of 10⁻³ MPa, and then, a coolant is injected into the cooling jacket 5 to cool the carbon dioxide solidification chamber 4 until the surface thermometer 14 stands at approximately -50 °C. Next, at Step S13, the on-off valve 13a is operated to inject the liquid carbon dioxide 2 inside the supply pipe 9a into the carbon dioxide solidification chamber 4 in a state where a pressure higher than the pressure (0.518 MPa) of the triple point is applied thereto. At Step S 14, after confirming that the carbon dioxide solidification chamber 4 is completely filled with the liquid carbon dioxide 2, the on-off valve 13a is closed to shut and airtightly close the carbon dioxide solidification chamber 4. Then, the coolant at a temperature controlled by the refrigerating machine is fed into the cooling jacket 5 to cool the liquid carbon dioxide 2 in a state where a pressure higher than the pressure of the triple point is applied thereto, and the temperature of the carbon dioxide solidification chamber 4 is lowered from -50 °C to -79 °C by 1 °C per approximately one minute. Specifically, at Step S 14, by cooling the liquid carbon dioxide 2 from a temperature higher than the temperature (-56.6 °C) of the triple point to approximately the sublimation temperature (-78.9 °C) at the atmospheric pressure while applying a pressure higher than the pressure of the triple point thereto, the liquid carbon dioxide 2 is directly solidified without being vaporized. An object of this step is to solidify the liquid carbon dioxide 2 while impurities (gases other than carbon dioxide) inside the carbon dioxide solidification chamber 4 are expelled. Next, at Step S15, the temperature of the carbon dioxide solidification chamber 4 is lowered from -79 °C to -100 °C in a short time. Through this step, the hardness of the solidified liquid carbon dioxide 2 is further increased. By changing the above-described cooling end temperature (-100 °C), the hardness of the solid carbon dioxide 7 to be formed is easily adjusted. At Step S16, after confirming that the solidification of the liquid carbon dioxide 2 has been completed and the pressure of the carbon dioxide solidification chamber 4 has been lowered to the atmospheric pressure, the cover 8 of the vacuum container 1 is opened. Thereafter, the solid carbon dioxide 7 having a surface slightly molten is taken out of the vacuum container 1. At this time, the temperature of the solid carbon dioxide 7 is not more than the sublimation temperature at the atmospheric pressure. This temperature difference causes numerous crack lines 15 on the solid carbon dioxide 7 (see Fig 2B).

According to this method for producing solid carbon dioxide, impurities are hardly mixed when the liquid carbon dioxide 2 is solidified, so that solid carbon dioxide 7 much harder than in the conventional method in which pressurized liquid carbon dioxide 2 is released to the atmosphere and solidified is formed, is formed. Further, numerous crack lines 15 are caused on the plate-shaped solid carbon dioxide 7 taken out of the vacuum container 15, so that when it is crushed, sharp angles are formed regardless of the sizes of the crushed pieces.
That is, according to the method for producing solid carbon dioxide, the solid carbon dioxide 7 having a hardness suitable as a shot material in the blast cleaning method can be easily formed. Further, plate-shaped solid carbon dioxide from which crushed pieces having sharp angles suitable as a shot material in the blast cleaning method can be formed can be easily produced.

The method for producing solid carbon dioxide of the present invention is not limited to the present example. Specifically, the cooling start temperature of the liquid carbon dioxide 2 at Step S 14 is not limited to -50 °C. However, to prevent the liquid carbon dioxide 2 from being solidified when it is injected into the carbon dioxide solidification chamber 4, this cooling start temperature must be set to be higher than at least the temperature of the triple point. However, if the cooling start temperature is excessively higher than the temperature of the triple point, the time for this cooling step becomes longer. Therefore, the cooling start temperature is preferably higher than the temperature of the triple point and close to the temperature of the triple point. The cooling end temperature must be set to be substantially equal to the sublimation temperature at the atmospheric pressure so that, even if the cooling step of Step S15 is omitted and the solid carbon dioxide 7 formed at Step S14 is taken out of the vacuum container 1 and exposed to the atmosphere, it does not sublimate immediately. Further, in the present example, the temperature of the carbon dioxide solidification chamber 4 is lowered by 1 °C per approximately one minute at Step S14, however, the cooling rate of this step is not limited to this, but can be variously changed. However, this step is preferably slowly performed in a comparatively long time so that impurities (gases other than carbon dioxide) inside the carbon dioxide solidification chamber 4 can be efficiently expelled. The cooling end temperature of Step S15 is set to be lower than at least the sublimation temperature at the atmospheric pressure, and not limited to -100 °C shown in this example. In other words, the cooling end temperature is changeable as appropriate according to the hardness of the solid carbon dioxide 7 to be formed. Further, the cooling time is also changeable as appropriate. Considering that the hardness of the solid carbon dioxide 7 is hardly influenced by an increase in the cooling time of this step and considering the cooling efficiency, the cooling time is preferably comparatively short.

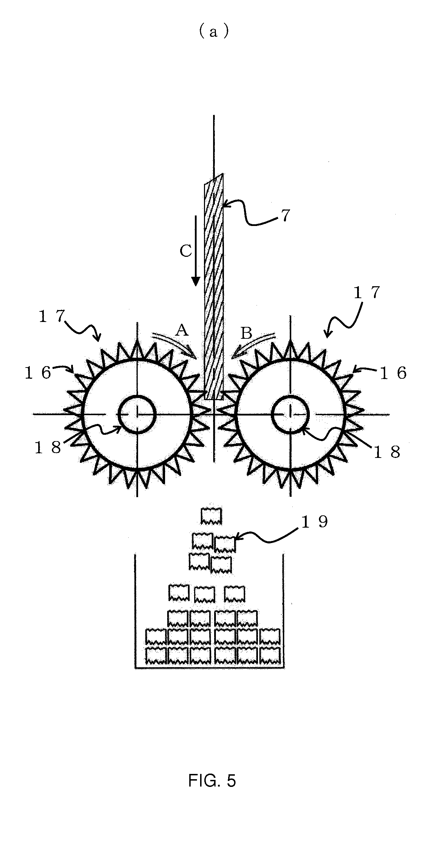

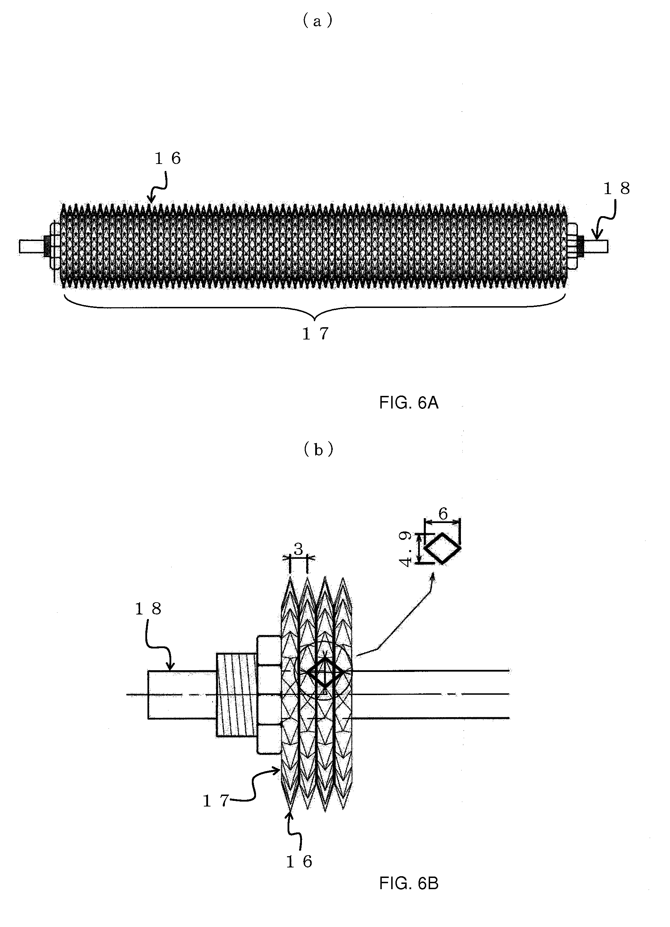

A step of crushing the plate-shaped solid carbon dioxide (Step S30 of Fig. 1) will be described in detail with reference to Fig. 5 and Fig. 6.
Fig. 5 is a schematic view of an example of a crushing machine for crushing plate-shaped solid carbon dioxide. Fig. 6A is a front view of a rotary blade of the crushing machine of Fig. 5, and Fig. 6B is a partial enlarged view of the vicinity of an end portion of Fig. 6A.
As shown in Fig. 5, the crushing machine of this example includes a pair of crushing gears 17 and 17 having a plurality of crushing blades 16. The crushing gears 17 and 17 are attached to drive shafts 18 and 18 so that their crushing blades 16 engage with each other. That is, the crushing gears 17 and 17 rotate in the directions of the arrows A and B according to rotations of the drive shafts 18 and 18, respectively. In this state, when the plate-shaped solid carbon dioxide 7 is put in the direction of the arrow C between the crushing gears 17 and 17, the solid carbon dioxide 7 is crushed by shearing of the crushing blades 16 and 16 while being pushed-in between the two drive shafts 18 and 18 according to the rotations of the crushing gears 17 and 17. Accordingly, crushed pieces 19 of the solid carbon dioxide 7 are formed. The drive shafts 18 and 18 are set parallel to each other and changeable in distance to each other. Further, the crushing gears 17 and 17 can be attached to the drive shafts 18 and 18 so that the crushing blades 16 and 16 engage with each other asymmetrically with respect to the solid carbon dioxide 7 to be put therebetween.
As shown in Fig. 6A and Fig. 6B,in the crushing machine of the present example, a plurality of crushing gears (with a diameter of 40 millimeters and a thickness of 3 millimeters) having 25 crushing blades are attached to the drive shafts 18. The crushing gears 17 adjacent to each other are attached to the drive shafts 18 so that their crushing blades 16 do not overlap each other as viewed in the directions of the drive shafts 18. In this case, the sizes of the crushed pieces 19 become not more than 6 millimeters x 4.9 millimeters, theoretically. When a spacer with a thickness of 1 millimeter is provided between the crushing gears 17, crushed pieces 19 with a width of 5 to 8 millimeters are obtained.

The crushing machine thus structured has an operation in which the sizes of the crushing pieces 19 change according to the interval between the drive shafts 18 and 18. Specifically, when the interval between the drive shafts 18 is narrowed, small crushed pieces 19 are formed, and when the interval between the drive shafts 18 is widened, large crushed pieces 19 are formed. Further, the crushing machine has an operation in which the sizes of the crushed pieces 19 change according to the width of the spacer set between the two crushing gears 17. Further, the sizes of the crushed pieces 19 are also changed by attaching the crushing gears 17 and 17 to the drive shafts 18 and 18 so that the crushing gears engage with each other asymmetrically with respect to the solid carbon dioxide 7 put therebetween.
As described above, in the crushing machine of the present example, the sizes of the crushed pieces 19 to be formed by crushing the plate-shaped solid carbon dioxide 7 can be adjusted.

The plate-shaped solid carbon dioxide 7 produced according to this method can be used not only as a shot material for a blast cleaning method, but also be used for the same purpose as conventional commercially available squared dry ice. The size (except for the thickness) of the plate-shaped solid carbon dioxide is not limited to the size shown in the present example, but can be changed as appropriate. Further, as a method for cooling the container when producing plate-shaped solid carbon dioxide 7, a method in which the container is immersed in a coolant, a method in which a coolant pipe is brought into contact with the container, and a method in which the container is directly attached to a cooling machine, etc., are available, and the method is not especially limited to the cooling method shown in the present example.

### Industrial Applicability

As described above, the invention of Claims 1 to 4 of the present invention are applicable to the field of blast cleaning in which extraneous matter is separated from an object to be cleaned by blowing a shot material to the object to be cleaned at a high speed.

## Claims

1. A blast cleaning method in which a shot material is blown to an object to be cleaned at a high speed to separate extraneous matter, comprising the steps of: forming plate-shaped solid carbon dioxide (7) by cooling liquid carbon dioxide (2) while applying a pressure higher than the pressure of the triple point thereto; crushing the plate-shaped solid carbon dioxide (7); and cleaning an object to be cleaned by using the crushed solid carbon dioxide (7) as a shot material.

2. The blast cleaning method according to Claim 1, wherein the thickness of the plate-shaped solid carbon dioxide (7) is 3 to 8 millimeters.

3. A method for producing solid carbon dioxide (7) to be used as a shot material in the blast cleaning method according to Claim 1 or 2, comprising: a first cooling step of cooling liquid carbon dioxide (2) to a sublimation temperature at the atmospheric pressure from a temperature higher than the temperature of the triple point while applying a pressure higher than the pressure of the triple point thereto; and a second cooling step of cooling the solid carbon dioxide (7) formed in the first cooling step to a temperature lower than the sublimation temperature.

4. A device for producing solid carbon dioxide (7) to be used as a shot material in the blast cleaning method according to Claim 1 or 2, comprising: a rectangular tabular hollow part (4) formed to become capable of being filled with liquid carbon dioxide (2); a cooling jacket (5) formed so as to surround this hollow part (4); a vacuum heat insulating chamber (6) formed so as to surround the cooling jacket(5); a vacuum pump (20) for vacuuming the vacuum heat insulating chamber (6) and the hollow part (4); a liquid carbon dioxide supply means (3) for supplying the liquid carbon dioxide (2) into the hollow part (4) through a first supply pipe (9a); a refrigerating machine to be connected to the cooling jacket (5) via a second supply pipe (11); a first on-off valve (13a) installed in the first supply pipe (9a); and a second on-off valve (8b) installed in the second supply pipe, wherein the hollow part (4), the cooling jacket (5), and the vacuum heat insulating chamber (6) form a vacuum container (1) with a triplex structure.
